# EUROPÄISCHE PATENTANMELDUNG

(11) **EP 4 664 058 A1**
(43) Veröffentlichungstag der Anmeldung: **17.12.2025**
(21) Anmeldenummer: 25167081.6
(22) Anmeldetag: 28.03.2025
(51) Int. Cl.: F41G 7/00, F41G 7/22, G01S 13/42, G01S 13/88, H01Q 1/28

(54) **RADARSENSORKONZEPT FÜR MULTI-SENSOR FLUGKÖRPERANWENDUNGEN**

(30) Priorität: 12.06.2024 DE 102024001908
(71) Anmelder: MBDA Deutschland GmbH, 86529 Schrobenhausen (DE)
(72) Erfinder: Haas, Daniel, 89077 Ulm (DE)
(74) Vertreter: Isarpatent

(57) **Zusammenfassung**

Offenbart ist eine Antennenanordnung zum Erfassen und/oder Verfolgen von einem oder von mehreren Objekten. Die Antennenanordnung umfasst eine Empfangsantennenanordnung mit Antennenelementen (111,113) zum Empfangen eines Signals, wobei die Empfangsantennenanordnung in einer ersten eindimensionalen Anordnung angeordnet ist. Die Antennenanordnung umfasst ferner eine Sendeantennenanordnung mit Antennenelementen (112,114) zum Senden des Signals, wobei die Sendeantennenanordnung in einer zweiten eindimensionalen Anordnung angeordnet ist, die sich von der ersten eindimensionalen Anordnung unterscheidet.

## Beschreibung

### TECHNISCHES GEBIET DER ERFINDUNG

Die Erfindung betrifft eine Antennenanordnung, die auf Kanten schmaler Flächen eine Sende- und Empfangsantennenanordnung mit Winkelauflösung bildet, insbesondere eine Sende- und Empfangsantennenanordnung auf einer Vielzahl von Kontrollflächen eines Flugkörpers zum Erfassen und/oder Verfolgen eines Objektes.

### HINTERGRUND DER ERFINDUNG

Um ein oder mehrere Objekte zu erfassen und/oder dieses zu verfolgen werden in herkömmlichen Systemen mehrere adaptive elektronisch steuerbare Anordnungen (adaptive electronically steerable arrays, ASEAs) verwendet, die zum Senden (transmit, Tx) von hochfrequenten Radarsignalen und zum Empfangen (receive, Rx) von (reflektierten) Radarsignalen konfiguriert sind.

US 2016/0084623 A1 offenbart ein AESA-System, das eine Vielzahl von AESAs umfasst, die jeweils eine Vielzahl von Strahlungselementen umfassen, wobei jede AESA zum Platzieren auf einer nach vorne gerichteten Oberfläche einer Steuerfläche eines Flugkörpers konfiguriert ist.

Eine Vielzahl von zweidimensionalen AESAs kann zu einer komplexen Elektronik führen, die in kompakte Systeme schwer zu integrieren ist. Zudem arbeiten herkömmliche Anordnungen mit hohen Frequenzen, um eine hohe Winkelauflösung zu erzielen. Ein Betrieb mit hohen Frequenzen kann zu einer verringerten Reichweite beim Erfassen und/dem Verfolgen des einen oder der mehreren Objekte führen.

Es wäre daher wünschenswert eine Antennenanordnung bereitzustellen, welche eine hohe Winkelauflösung ermöglicht, während zugleich die Kosten für die Herstellung sowie die Aufwände für die Integration und/oder den Betrieb der Antennenanordnung zu reduzieren sind. Ein Betrieb mit tieferen Frequenzen wäre ebenso wünschenswert.

### ZUSAMMENFASSUNG DER ERFINDUNG

Die Erfindung ist durch die unabhängigen Ansprüche definiert. Die abhängigen Ansprüche definieren vorteilhafte Ausführungsformen.

Gemäß einem ersten Aspekt der Erfindung umfasst eine Antennenanordnung zum Erfassen und/oder Verfolgen von einem oder von mehreren Objekten eine Empfangsantennenanordnung mit Antennenelementen zum Empfangen eines Signals, wobei die Empfangsantennenanordnung in einer ersten eindimensionalen Anordnung angeordnet ist. Die Antennenanordnung umfasst ferner eine Sendeantennenanordnung mit Antennenelementen zum Senden des Signals, wobei die Sendeantennenanordnung in einer zweiten eindimensionalen Anordnung angeordnet ist, die sich von der ersten eindimensionalen Anordnung unterscheidet.

Gemäß einer Weiterbildung weist die erste eindimensionale Anordnung eine Form einer Kante einer Kontrollfläche eines Flugkörpers aufweist. Die erste eindimensionale Anordnung ist vorzugsweise eine lineare Anordnung.

Gemäß einer Weiterbildung weist die zweite eindimensionale Anordnung die Form einer Kante einer Kontrollfläche des Flugkörpers auf. Die zweite eindimensionale Anordnung ist vorzugsweise eine lineare Anordnung.

Gemäß einer Weiterbildung bilden die erste eindimensionale Anordnung und die zweite eindimensionale Anordnung einen Winkel im Bereich zwischen 45° und 135°. Gemäß einer Weiterbildung sind die erste eindimensionale Anordnung und die zweite eindimensionale Anordnung orthogonal zueinander angeordnet.

Gemäß einer Weiterbildung besteht die Antennenanordnung einzig aus der Empfangsantennenanordnung und der Sendeantennenanordnung.

Gemäß einer Weiterbildung umfasst die Empfangsantennenanordnung eine erste Vielzahl von Antennenelementen und eine dritte Vielzahl von Antennenelementen.

Gemäß einer Weiterbildung umfasst die Sendeantennenanordnung eine zweite Vielzahl von Antennenelementen und eine vierte Vielzahl von Antennenelementen.

Gemäß einer Weiterbildung sind die Antennenelemente der Sendeantennenanordnung zum Senden von phasensynchronisierten Signalen konfigurierbar, um eine gemeinsame gerichtete Antennenkeule zu erzeugen.

Gemäß einer Weiterbildung sind die Antennenelemente der Sendeantennenanordnung zum Senden von paarweise orthogonalen Signalen konfigurierbar.

Gemäß einem ersten Aspekt der Erfindung umfasst ein Flugkörper eine Vielzahl von Kontrollflächen und die Antennenanordnung wie oben beschrieben. Die Empfangsantennenanordnung und die Sendeantennenanordnung sind dabei auf unterschiedlichen Kontrollflächen der Vielzahl von Kontrollflächen angeordnet.

Gemäß einer Weiterbildung umfasst der Flugkörper ferner einen Infrarotsensor zum Erfassen und/oder Verfolgen des Objektes.

Gemäß einer Weiterbildung ist die erste Vielzahl von Antennenelementen auf einer Kante einer ersten Kontrollfläche angeordnet.

Gemäß einer Weiterbildung ist die zweite Vielzahl von Antennenelementen auf einer Kante einer zweiten Kontrollfläche angeordnet.

Gemäß einer Weiterbildung ist die dritte Vielzahl von Antennenelementen auf einer Kante einer dritten Kontrollfläche angeordnet.

Gemäß einer Weiterbildung ist die vierte Vielzahl von Antennenelementen auf einer Kante einer vierten Kontrollfläche angeordnet.

Gemäß einer Weiterbildung sind die Kontrollflächen der Vielzahl von Kontrollflächen teleskopartig, durch eine Drehung um eine Achse in Flugrichtung des Flugkörpers, oder um eine Achse orthogonal zur Flugrichtung ausklappbar.

Gemäß einer Weiterbildung weisen die Kontrollflächen eine Dicke von fünf Millimeter oder weniger auf.

Weitere vorteilhafte Ausgestaltungen und Weiterbildungen ergeben sich aus den abhängigen Ansprüchen sowie aus der Beschreibung unter Bezugnahme auf die Figuren.

### KURZBESCHREIBUNG DER ZEICHNUNGEN

Im Folgenden wird die Erfindung unter Bezugnahme auf die folgenden Figuren näher erläutert.
Fig. 1 zeigt eine beispielhafte Ausführungsform einer Antennenanordnung auf Kanten von Kontrollflächen eines Flugkörpers in einer Draufsicht (') und einer Seitensicht (").
Fig. 2 zeigt einen Flugkörper mit einer beispielhaften Ausführungsform einer ersten Antennenanordnung auf einer vorderen Vielzahl von Kontrollflächen am Flugkörper und/oder einer zweiten Antennenanordnung auf einer hinteren Vielzahl von Kontrollflächen am Flugkörper.
Fig. 3 zeigt beispielhafte Antennenkeulen der Sendeantennen (Tx-Antennenkeule, *Fₓ*)*,* der Empfangsantennen (Rx-Antennenkeule, *F_{y}*) und deren Überlagerung (Tx-Rx-Antennenkeule, *F_{xy}*) auf einer Halbsphäre (*ϕ*, *θ*) in bspw. Flugrichtung (z) des Flugkörpers von Fig. 2.

Die beiliegenden Figuren sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt. Richtungsangebende Terminologie wie etwa "oben", "unten", "links", "rechts", "über", "unter", "horizontal", "vertikal", "vorne", "hinten" und ähnliche Angaben werden lediglich zu erläuternden Zwecken verwendet und dienen nicht der Beschränkung der Allgemeinheit auf spezifische Ausgestaltungen wie in den Figuren gezeigt.

In den Figuren bezeichnen dieselben Bezugszeichen gleiche oder funktionsgleiche Komponenten, soweit nichts Gegenteiliges angegeben ist.

### AUSFÜHRLICHE BESCHREIBUNG VON AUSFÜHRUNGSBEISPIELEN DER ERFINDUNG

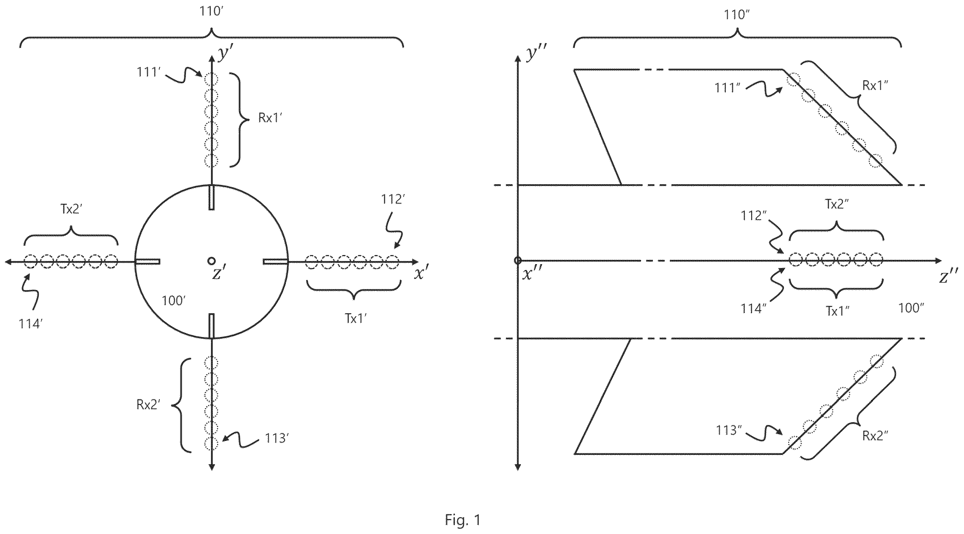

Fig. 1 zeigt eine beispielhafte Ausführungsform einer Antennenanordnung auf Kanten einer Vielzahl 110 von Kontrollflächen eines Flugkörpers 100 in einer Draufsicht (') und einer Seitensicht ("). Antennenanordnung kann auch auf anderen schmalen Flächen angeordnet sein.

Wie in dem Beispiel gezeigt kann die Vielzahl 110 von Kontrollflächen symmetrisch um eine Achse in Längsrichtung des Flugkörpers 100 am Flugkörper 100 angeordnet sein. Eine Anordnung mit geringerer Symmetrie oder eine asymmetrische Anordnung ist auch möglich. Die Symmetrie der Anordnung kann benutzt werden, um bspw. die Abstrahlcharakteristik identischer Antennenelementen der Anordnung basierend auf einer Abstrahlcharakteristik eines einzigen Referenzantennenelementes der Anordnung vereinfacht zu bestimmen.

Die Kontrollflächen können faltbar am Flugkörper 100 angeordnet sein. Die Kontrollflächen können teleskopartig, durch eine Drehung um eine Achse in Flugrichtung oder um eine andere Achse, die bspw. orthogonal zur Flugrichtung ist, ausklappbar sein, wie in Fig. 1 durch Aussparungen für die Kontrollflächen beispielhaft gezeigt. Die Kontrollflächen können eine Dicke von 5 Millimeter oder weniger aufweisen.

Die Antennenanordnung ist auf der Vielzahl 110 von Kontrollflächen angeordnet, bspw. auf 3, 4, 5, 6 oder mehr Kontrollflächen. Die Antennenanordnung umfasst eine Vielzahl Rx1, Tx1, Rx2, und/oder Tx2 von Antennenelementen 111, 112, 113, und/oder 114.

Eine, zwei oder mehrere der Vielzahl 110 von Kontrollflächen am Flugkörper 100 können frei von Antennenelementen sein. In anderen Worten ist es nicht erforderlich, dass jede Kontrollfläche der Vielzahl 110 von Kontrollflächen ein Antennenelement umfasst.

Eine erste Kontrollfläche kann die Vielzahl Rx1 von Antennenelementen 111 umfassen. Eine zweite Kontrollfläche kann die Vielzahl Tx1 von Antennenelementen 112 umfassen. Eine dritte Kontrollfläche kann die Vielzahl Rx2 von Antennenelementen 113 umfassen. Eine vierte Kontrollfläche kann die Vielzahl Tx2 von Antennenelementen 114 umfassen.

Die Vielzahl Rx1 von Antennenelementen 111 und die Vielzahl Rx2 von Antennenelementen 113 können auch auf einer einzigen Kontrollfläche angeordnet sein. Alternativ oder ergänzend können die Vielzahl Tx1 von Antennenelementen 112 und die Vielzahl Tx2 von Antennenelementen 114 auch auf einer einzigen Kontrollfläche angeordnet sein.

Die Vielzahl Rx1 von Antennenelementen 111 und die Vielzahl Rx2 von Antennenelementen 113 können zusammen 2, 3, oder N Antennenelemente umfassen, wobei N eine ganze Zahl größer als 3 ist. Die Vielzahl Tx1 von Antennenelementen 112 und die Vielzahl Tx2 von Antennenelementen 114 können zusammen 2, 3, oder M Antennenelemente umfassen, wobei M eine ganze Zahl größer als 3 ist.

Die Vielzahl Rx1 von Antennenelementen 111 kann auf einer Kante der ersten Kontrollfläche angeordnet sein. Die Vielzahl Rx1 von Antennenelementen 111 kann eindimensional, bspw. entlang einer Kante, insbesondere linear, angeordnet sein. Die Antennenelemente 111 der Vielzahl Rx1 können identisch sein und/oder einen Abstand voneinander aufweisen, der für benachbarte Antennenelemente identisch ist. Die erste Kontrollfläche kann nur die Vielzahl Rx1 von Antennenelementen 111 umfassen. Die Vielzahl Rx1 von Antennenelementen 111 kann zum Senden und Empfangen konfiguriert sein. Insbesondere kann die Vielzahl Rx1 von Antennenelementen 111 nur zum Empfangen konfiguriert sein.

Die Vielzahl Tx1 von Antennenelementen 112 kann auf einer Kante der zweiten Kontrollfläche angeordnet sein. Die Vielzahl Tx1 von Antennenelementen 112 kann eindimensional, bspw. entlang einer Kante, insbesondere linear, angeordnet sein. Die Antennenelemente 112 der Vielzahl Tx1 können identisch sein und/oder einen Abstand voneinander aufweisen, der für benachbarte Antennenelemente identisch ist. Die zweite Kontrollfläche kann nur die Vielzahl Tx1 von Antennenelementen 112 umfassen. Die Vielzahl Tx1 von Antennenelementen 112 kann zum Senden und Empfangen konfiguriert sein. Insbesondere kann die Vielzahl Tx1 von Antennenelementen 112 nur zum Senden konfiguriert sein.

Die Vielzahl Rx2 von Antennenelementen 113 kann auf einer Kante der dritten Kontrollfläche angeordnet sein. Die Vielzahl Rx2 von Antennenelementen 113 kann eindimensional, bspw. entlang einer Kante, insbesondere linear, angeordnet sein. Die Antennenelemente 113 der Vielzahl Rx2 können identisch sein und/oder einen Abstand voneinander aufweisen, der für benachbarte Antennenelemente identisch ist. Die dritte Kontrollfläche kann nur die Vielzahl Rx2 von Antennenelementen 113 umfassen. Die Vielzahl Rx2 von Antennenelementen 113 kann zum Senden und Empfangen konfiguriert sein. Insbesondere kann die Vielzahl Rx3 von Antennenelementen 113 nur zum Empfangen konfiguriert sein.

Die Vielzahl Tx2 von Antennenelementen 114 kann auf einer Kante der vierten Kontrollfläche angeordnet sein. Die Vielzahl Tx2 von Antennenelementen 114 kann eindimensional, bspw. entlang einer Kante, insbesondere linear, angeordnet sein. Die Antennenelemente 114 der Vielzahl Tx2 können identisch sein und/oder einen Abstand voneinander aufweisen, der für benachbarte Antennenelemente identisch ist. Die vierte Kontrollfläche kann nur die Vielzahl Tx2 von Antennenelementen 114 umfassen. Die Vielzahl Tx2 von Antennenelementen 114 kann zum Senden und Empfangen konfiguriert sein. Insbesondere kann die Vielzahl Tx2 von Antennenelementen 114 nur zum Senden konfiguriert sein.

Die erste Kontrollfläche und die dritte Kontrollfläche können im Wesentlichen in einer ersten Ebene liegen. Die zweite Kontrollfläche und die vierte Kontrollfläche können im Wesentlichen in einer zweiten Ebene liegen. Die ersten Ebene und die zweite Kontrollfläche können im Wesentlichen orthogonal zueinander sein.

Die obigen Anordnungen von Antennenelementen sind beispielhaft, sie können analog auf 3, 5, 6 oder mehr Kontrollflächen ausgeführt sein.

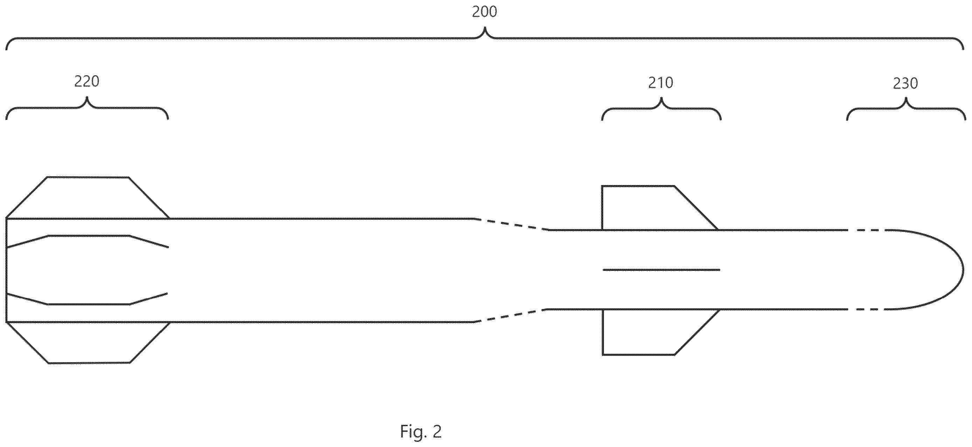

Fig. 2 zeigt einen Flugkörper 200 mit einer beispielhaften Ausführungsform einer ersten Antennenanordnung auf einer vorderen Vielzahl 210 von Kontrollflächen am Flugkörper 200 und/oder einer zweiten Antennenanordnung auf einer hinteren Vielzahl 220 von Kontrollflächen am Flugkörper 200.

Der Flugkörper 200 kann bspw. ohne Kontrollflächen einen Durchmesser im Bereich zwischen 120 mm und 150mm aufweisen. Mit Kontrollflächen kann der Durchmesser bis zu 500 mm betragen. Der Flugkörper 200 kann modular aufgebaut sein, zum Erleichtern eines Transportes oder einer Manipulation zum Verschuss. Der Flugkörper 200 kann ferner bspw. eine Länge im Bereich zwischen 1000 mm und 4000 mm aufweisen. Die erste Antennenanordnung und/oder die zweite Antennenanordnung kann im Wesentlichen identisch mit der in Fig. 1 gezeigten Antennenanordnung sein. Vorzugsweise umfasst der Flugkörper 200 nur eine einzige Antennenanordnung.

Der Flugkörper 200 kann einen Infrarotsensor umfassen, zum Erfassen und/oder Verfolgen eines Objektes, nachfolgend auch als Infrarotsuchkopf bezeichnet. Der Flugkörper 200 kann mittels des Infrarotsensors und einer Antennenanordnung wie oben beschrieben zum Erkennen von mehreren Objekten konfiguriert sein.

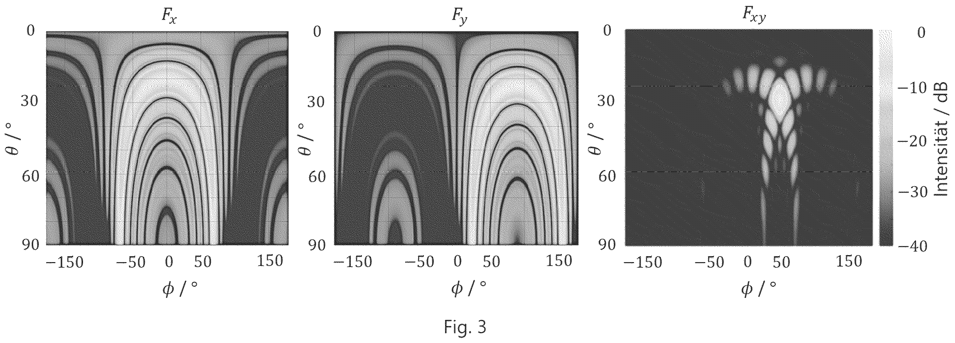

Fig. 3 zeigt beispielhafte Antennenkeulen von Sendeantennen (Tx-Antennenkeule, *Fₓ*), von Empfangsantennen (Rx-Antennenkeule, *F_{y}*) und deren Überlagerung (Tx-Rx-Antennenkeule, *F_{xy}*) auf einer Halbsphäre (*ϕ*, *θ*) in bspw. Flugrichtung (z) des Flugkörpers von Fig. 2.

Wie gezeigt kann durch die Kombination von Tx- und Rx-Antennenelementen ein Tx/Rx-Muster gebildet werden, zum Erfassen und/oder Verfolgen eines Objekts.

Die oben beschriebenen Antennenanordnungen erlauben eine elektronische Strahlausrichtung der Tx-Rx-Antennenkeule im dreidimensionalen Raum.

Durch die getrennte Anordnung von Sende- und Empfangsantennenelementen kann die Komplexität des Systems erheblich reduziert werden. Ein Betrieb bei tieferen Frequenzen wird ermöglicht.

Im Betreib können bspw. die erste Vielzahl Tx1 von Antennenelementen 111 und/oder die zweite Vielzahl Tx2 von Antennenelementen 113, nachfolgend als Sendeantennenanordnung (Tx1 und/oder Tx2) bezeichnet, Radarsignale senden, während die zweite Vielzahl Rx1 von Antennenelementen 112 und/oder die vierte Vielzahl Rx2 von Antennenelementen 114, nachfolgend als Empfangsantennenanordnung (Rx1 und/oder Rx2) bezeichnet, diese Radarsignale empfängt, bspw. nach einer Reflektion an einem Objekt, welches zu erfassen und/oder zu verfolgen ist.

Die einzelnen Antennenelemente der Sendeantennenanordnung (Tx1 und/oder Tx2) können a) phasensynchronisierte Signale abstrahlen und so eine gemeinsame gerichtete Tx-Antennenkeule erzeugen.

Die einzelnen Antennenelemente der Sendeantennenanordnung (Tx1 und/oder Tx2) können b)jeweils orthogonale Signale abstrahlen und so einen MIMO-Betrieb (multiple input multiple output, MIMO) mit N orthogonalen Tx-Signalen erlauben

Die einzelnen Antennenelemente der Sendeantennenanordnung (Tx1 und/oder Tx2) können c) in k Subanordnungen n₁ bis nₖ mit n₁ + ... + nₖ = N angeordnet orthogonale Signale abstrahlen und so einen MIMO-Betrieb mit k orthogonalen Tx-Signalen erlauben.

Die Empfangssignale der M einzelnen Antennenelemente einer Empfangsantennenanordnung (Rx1 und/oder Rx2) können analog und/oder digital kombiniert werden, um die kombinierten Signale zu verarbeiten, zum Erfassen und/oder Verfolgen eines Objektes.

In der vorangegangenen detaillierten Beschreibung sind verschiedene Merkmale zur Verbesserung der Stringenz der Darstellung in einem oder mehreren Beispielen zusammengefasst worden. Es sollte dabei jedoch klar sein, dass die obige Beschreibung lediglich illustrativer, keinesfalls jedoch beschränkender Natur ist. Sie dient der Abdeckung aller Alternativen, Modifikationen und Äquivalente der verschiedenen Merkmale und Ausführungsbeispiele. Viele andere Beispiele werden dem Fachmann aufgrund seiner fachlichen Kenntnisse in Anbetracht der obigen Beschreibung sofort und unmittelbar klar sein.

Die Ausführungsbeispiele wurden ausgewählt und beschrieben, um die der Erfindung zugrundeliegenden Prinzipien und ihre Anwendungsmöglichkeiten in der Praxis bestmöglich darstellen zu können. Dadurch können Fachleute die Erfindung und ihre verschiedenen Ausführungsbeispiele in Bezug auf den beabsichtigten Einsatzzweck optimal modifizieren und nutzen. In den Ansprüchen sowie der Beschreibung werden die Begriffe "beinhaltend" und "aufweisend" als neutralsprachliche Begrifflichkeiten für die entsprechenden Begriffe "umfassend" verwendet. Weiterhin soll eine Verwendung der Begriffe "ein", "einer" und "eine" eine Mehrzahl derartig beschriebener Merkmale und Komponenten nicht grundsätzlich ausschließen.

### BEZUGSZEICHENLISTE

### BEZUGSZEICHEN

- 100: Flugkörper
- 110: Vielzahl von Kontrollflächen
- Tx1: erst Vielzahl von Antennenelementen der Sendeantennenanordnung
- Tx2: dritte Vielzahl von Antennenelementen der Sendeantennenanordnung
- Rx1: zweite Vielzahl von Antennenelementen der Empfangsantennenanordnung
- Rx2: vierte Vielzahl von Antennenelementen der Empfangsantennenanordnung
- 111: Antennenelemente von Tx1
- 112: Antennenelemente von Rx1
- 113: Antennenelemente von Tx2
- 114: Antennenelemente von Rx2
- 200: Flugkörper
- 210: erste Vielzahl von Kontrollflächen
- 220: zweite Vielzahl von Kontrollflächen
- 230: Infrarotsensor

## Patentansprüche

1. Antennenanordnung zum Erfassen und/oder Verfolgen von einem oder von mehreren Objekten, wobei die Antennenanordnung umfasst:
eine Empfangsantennenanordnung (Rx1 und/oder Rx2) mit Antennenelementen (111 und/oder 113) zum Empfangen eines Signals, wobei die Empfangsantennenanordnung (Rx1 und/oder Rx2) in einer ersten eindimensionalen Anordnung angeordnet ist;
eine Sendeantennenanordnung (Tx1 und/oder Tx2) mit Antennenelementen (112 und/oder 114) zum Senden des Signals, wobei die Sendeantennenanordnung (Tx1 und/oder Tx2) in einer zweiten eindimensionalen Anordnung angeordnet ist, die sich von der ersten eindimensionalen Anordnung unterscheidet.

2. Antennenanordnung nach Anspruch 1,
wobei die erste eindimensionale Anordnung eine Form einer Kante einer Kontrollfläche eines Flugkörpers (100; 200) aufweist, vorzugsweise eine lineare Anordnung ist; und/oder
wobei die zweite eindimensionale Anordnung die Form einer Kante einer Kontrollfläche des Flugkörpers (100; 200) aufweist, vorzugsweise eine lineare Anordnung ist.

3. Antennenanordnung nach irgendeinem der Ansprüche 1 bis 2, wobei die erste eindimensionale Anordnung und die zweite eindimensionale Anordnung einen Winkel im Bereich zwischen 45° und 135° bilden, vorzugsweise orthogonal zueinander sind.

4. Antennenanordnung nach irgendeinem der Ansprüche 1 bis 3, wobei die Antennenanordnung aus der Empfangsantennenanordnung und der Sendeantennenanordnung besteht.

5. Antennenanordnung nach irgendeinem der Ansprüche 1 bis 4,
wobei die Empfangsantennenanordnung eine erste Vielzahl (Rx1) von Antennenelementen (111) und eine dritte Vielzahl (Rx2) von Antennenelementen (113) umfasst; und/oder
wobei die Sendeantennenanordnung eine zweite Vielzahl (Tx1) von Antennenelementen (112) und eine vierte Vielzahl (Tx2) von Antennenelementen (114) umfasst.

6. Antennenanordnung nach irgendeinem der Ansprüche 1 bis 5,
wobei die Antennenelemente (112 und/oder 114) der Sendeantennenanordnung (Tx1 und/oder Tx2) zum Senden von phasensynchronisierten Signalen konfigurierbar sind, um eine gemeinsame gerichtete Antennenkeule zu erzeugen; und/oder
wobei die Antennenelemente (112 und/oder 114) der Sendeantennenanordnung (Tx1 und/oder Tx2) zum Senden von paarweise orthogonalen Signalen konfigurierbar sind.

7. Flugkörper (100; 200), wobei der Flugkörper (100; 200) umfasst:
eine Vielzahl (110; 210, 220) von Kontrollflächen; und
die Antennenanordnung nach irgendeinem der Ansprüche 1 bis 6;
wobei die Empfangsantennenanordnung (Rx1 und/oder Rx2) und die Sendeantennenanordnung (Tx1 und/oder Tx2) auf unterschiedlichen Kontrollflächen der Vielzahl (110; 210, 220) von Kontrollflächen angeordnet sind.

8. Flugkörper (100; 200) nach Anspruch 7, wobei der Flugkörper (100; 200) ferner einen Infrarotsensor zum Erfassen und/oder Verfolgen des Objektes umfasst.

9. Flugkörper (100; 200) nach irgendeinem der Ansprüche 7 bis 8,
wobei die erste Vielzahl (Rx1) von Antennenelementen (111) auf einer Kante einer ersten Kontrollfläche angeordnet ist;
wobei die zweite Vielzahl (Tx1) von Antennenelementen (112) auf einer Kante einer zweiten Kontrollfläche angeordnet ist;
wobei die dritte Vielzahl (Rx2) von Antennenelementen (113) auf einer Kante einer dritten Kontrollfläche angeordnet ist; und
wobei die vierte Vielzahl (Tx2) von Antennenelementen (114) auf einer Kante einer vierten Kontrollfläche angeordnet ist.

10. Flugkörper (100; 200) nach irgendeinem der Ansprüche 7 bis 9, wobei die Kontrollflächen der Vielzahl (110; 210, 220) von Kontrollflächen teleskopartig, durch eine Drehung um eine Achse (z) in Flugrichtung des Flugkörpers (100; 200), oder um eine Achse orthogonal zur Flugrichtung ausklappbar sind und vorzugsweise eine Dicke von fünf Millimeter oder weniger aufweisen.
